# EUROPEAN PATENT APPLICATION

(11) **EP 4 431 236 A1**
(43) Date of publication of application: **18.09.2024**
(21) Application number: 21964181.8
(22) Date of filing: 12.11.2021
(51) Int. Cl.: B24B 37/24, B24B 37/22, B24D 11/00, B29C 33/42, B29C 33/44

(54) **COMPOSITE POLISHING PAD INCLUDING CARBON NANOTUBES, AND METHOD FOR PRODUCING SAME**

(71) Applicant: KPX Chemical Co., Ltd., Seoul 04143 (KR); Korea Advanced Institute of Science and Technology, Daejeon 34141 (KR)
(72) Inventor: MIN, Byung Ju, Incheon 22734 (KR); HONG, Seok Ji, Hwaseong-si, Gyeonggi-do 18444 (KR); KIM, Seung Geun, Hwaseong-si, Gyeonggi-do 18466 (KR); CHOI, Jung Hee, Seoul 03709 (KR); KANG, Min Woo, Yongin-si, Gyeonggi-do 17103 (KR); OH, Nam Gue, Hwaseong-si, Gyeonggi-do 18467 (KR); KIM, Sanha, Daejeon 34141 (KR); JEONG, Ji Hun, Daejeon 34141 (KR); RYU, Hyun Jun, Daejeon 34141 (KR); KANG, Sukkyung, Daejeon 34141 (KR); KIM, Seong Jae, Daejeon 34141 (KR)
(74) Representative: dompatent von Kreisler Selting Werner - Partnerschaft von Patent- und Rechtsanwälten mbB
(86) International application number: PCT/KR2021/016562
(87) International publication number: WO 2023/085471

(57) **Abstract**

The present invention provides a composite polishing pad for CMP, and a method for producing the same. The composite polishing pad for CMP comprises: a polymer substrate layer including a plurality of protrusions formed on the upper surface thereof; and a carbon nanotube layer including carbon nanotubes embedded in and fixed to the upper portion of the substrate layer.

## Description

### [Technical Field]

The present invention relates to a composite polishing pad including carbon nanotubes, and a method for producing the same.

### [Background Art]

Chemical mechanical polishing (CMP) is a key process for flattening and mirroring a wafer or a glass panel, and the polishing is performed by mechanical and chemical action of a polishing pad and a slurry containing nanoparticles.

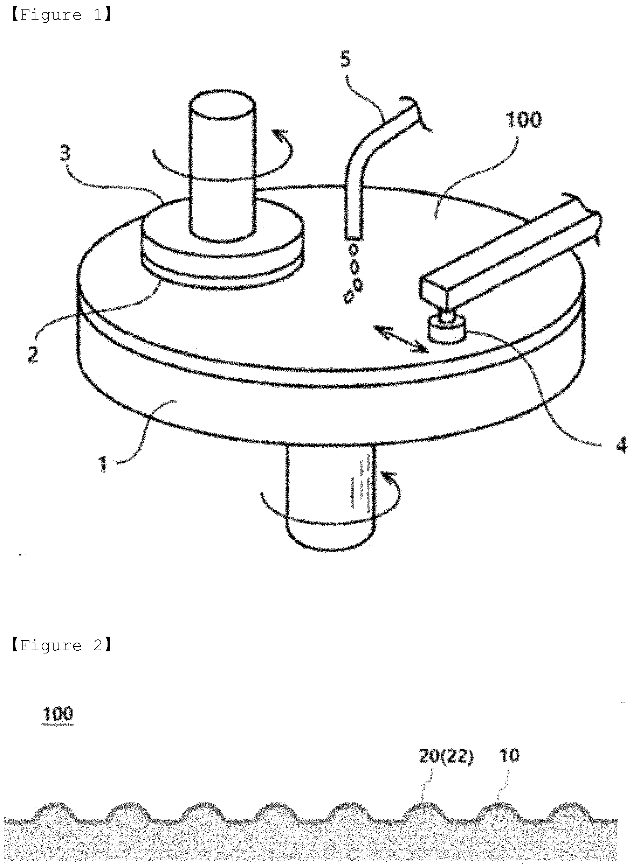

FIG. 1 is a schematic diagram of a CMP apparatus. The CMP apparatus performs polishing by, while a carrier 3 firmly fixes a polishing object 2 (for example: wafer), pressurizing the polishing object onto a surface of a polishing pad 100 fixed on a rotary table 1. Specifically, while the carrier 3 and the rotary table 1 each independently rotate, a liquid slurry (abrasive) is applied to the polishing pad 100 from a nozzle 5, and as a result, chemical and mechanical polishing is obtained. In addition, as a conditioner 4 is pressurized against the polishing pad 100 at a position separated from the polishing object 1 during the polishing process, the surface of the polishing pad 100 is made to be roughened, and the rough surface state of the polishing pad is maintained.

In the CMP apparatus, a polyurethane-based polishing pad is generally used. However, existing polyurethane-based polishing pads have a disadvantage of short lifetime since abrasion progresses rapidly due to friction with high hardness nanoparticles, a polishing object and a diamond conditioner during a polishing process. In addition, existing polyurethane-based polishing pads have a disadvantage of not guaranteeing uniform polishing performance due to irregular surface roughness.

### [Prior Art Document]

### [Patent Document]

Korean Laid-Open Patent Publication No. 10-2021-0002429

### [Disclosure]

### [Technical Problem]

The present invention has been devised to solve the conventional problems as described above, and is directed to providing a composite polishing pad for CMP having significantly improved polishing performance and lifetime, and a method for efficiently producing the same.

### [Technical Solution]

In order to achieve the above object, the present invention provides a composite polishing pad for CMP, including:
a polymer substrate layer including a plurality of protrusions formed on an upper surface thereof; and
a carbon nanotube layer including carbon nanotubes embedded in and fixed to the upper portion of the substrate layer.

In one embodiment of the present invention, carbon nanotubes of the carbon nanotube layer may be embedded in the upper surface of the polymer substrate layer in an irregular net form structure.

In one embodiment of the present invention, the irregular net form structure may be a structure formed by scattering the carbon nanotubes so that some thereof overlap each other.

In one embodiment of the present invention, the polymer substrate layer may have shore hardness of 20D to 70D.

In one embodiment of the present invention, the protrusion may have a maximum width of 10 um to 500 um, and a height of 3 um to 150 um.

In one embodiment of the present invention, the carbon nanotubes may have a diameter of 1 nm to 50 nm, and a length of 1 um to 30 um.

In one embodiment of the present invention, the protrusion may have a hemisphere-like shape.

In addition, the present invention provides a method for producing a composite polishing pad for CMP, including the steps of:
(a) scattering carbon nanotubes on a mold having a plurality of protrusions engraved therein so that some thereof overlap each other;
(b) forming a polymer substrate layer with a flat upper surface by coating a polymer on the upper portion of the carbon nanotubes; and
(c) demolding the mold.

In one embodiment of the present invention, the step (b) above may be performed under vacuum.

In addition, the present invention provides a method for producing a composite polishing pad for CMP, including the steps of:
(a) scattering carbon nanotubes on a substrate so that some thereof overlap each other;
(b) forming a polymer substrate layer with a flat upper surface by coating a polymer on the upper portion of the carbon nanotubes;
(c) separating and removing the substrate from the carbon nanotubes;
(d) forming a plurality of protrusions including the polymer substrate layer and the carbon nanotube layer having an irregular net form structure by conducting an embossing treatment on the substrate-removed surface.

In one embodiment of the present invention, the embossing treatment in the step (d) may be conducted by pressurizing the upper surface of the substrate-removed carbon nanotubes with a mold having a plurality of protrusions engraved therein under a heating condition.

In one embodiment of the present invention, the step (b) may be performed under vacuum.

### [Advantageous Effects]

The composite polishing pad for CMP of the present invention includes a carbon nanotube layer with carbon nanotubes embedded in and fixed to the upper surface of a polymer substrate layer, thereby providing improved polishing performance and lifetime.

In addition, a method for producing a composite polishing pad for CMP of the present invention provides a method capable of efficiently producing the polishing pad.

### [Description of Drawings]

FIG. 1 is a perspective view illustrating a structure of a typical CMP apparatus.
FIG. 2 is a cross-sectional view schematically showing one embodiment of a composite polishing pad of the present invention.
FIG. 3 is a cross-sectional view schematically showing a structure of a protrusion included in the composite polishing pad as one embodiment of the present invention.
FIG. 4 is a diagram schematically illustrating a contact pattern between a fine protrusion, an abrasive particle and a polishing object depending on differences in mechanical properties of the fine protrusion provided in the polishing pad.
FIG. 5 is a diagram schematically showing a method for producing a composite polishing pad as one embodiment of the present invention.
FIG. 6 illustrates a SEM picture obtained by photographing a composite polishing pad in which carbon nanotubes are arranged in an irregular net form structure on the upper surface of the polymer substrate layer as one embodiment of the present invention.

### [Best Mode]

Hereinafter, embodiments of the present invention will be described in detail with reference to accompanying drawings so that those skilled in the art may readily implement the present invention. However, the present invention may be embodied in various different forms, and is not limited to the embodiments described herein. The same reference numerals are used for like elements throughout the specification.

When a certain constituent is referred to be "connected to, provided in, or installed on" another constituent, it needs to be understood that the certain constituent may be directed connected to or installed on the other constituent, but another constituent may also be present in between.

A composite polishing pad for CMP of the present invention includes, as shown in FIG. 2 to FIG. 3,
a polymer substrate layer 10 including a plurality of protrusions formed on an upper surface thereof; and
a carbon nanotube layer 20 including carbon nanotubes 22 embedded in and fixed to the upper surface of the substrate layer.

The composite polishing pad of the present invention has a characteristic of significantly improving polishing efficiency and lifetime by the above structure.

In other words, when abrasive particles are pressed into the carbon nanotube layer, a high force is applied to the abrasive particles due to high hardness of the surface of the carbon nanotubes and a polyurethane in which the carbon nanotubes are embedded to improve polishing efficiency. In addition, the lifetime of the polishing pad is also improved by improving mechanical strength due to the presence of the carbon nanotube surface layer.

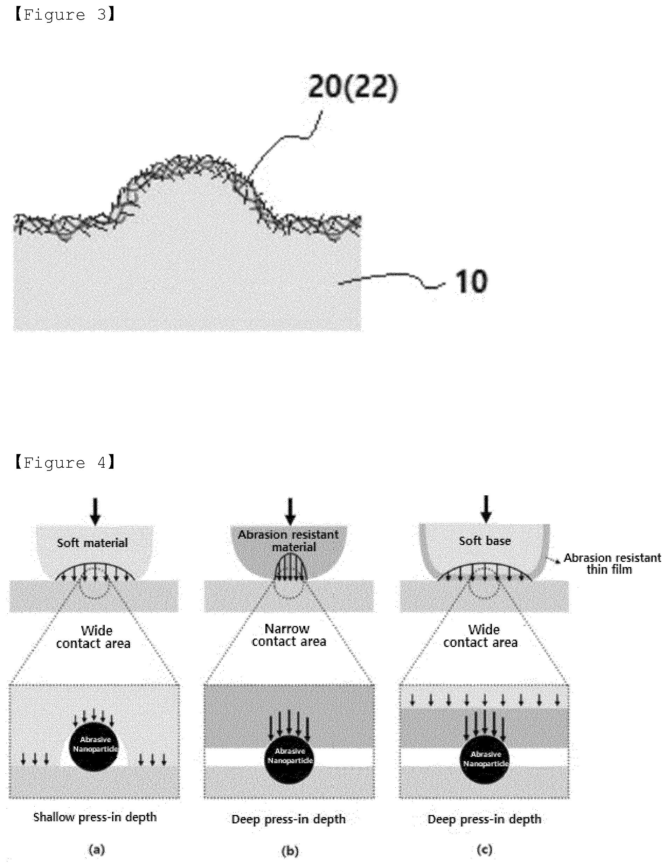

In one embodiment of the present invention, the carbon nanotubes of the carbon nanotube layer 20 may be embedded in the surface of the polymer substrate layer 10 in an irregular net form structure, as shown in FIG. 2 and FIG. 3.

The irregular net form structure may be a structure formed by scattering the carbon nanotubes so that some thereof overlap. The meaning of scattering means disposing the carbon nanotubes through dispersion, and the meaning of overlap means that some of the carbon nanotubes overlap to strengthen a three-dimensional structure.

In one embodiment of the present invention, the polymer substrate layer 10 may have shore hardness of 20D to 70D, preferably 30D to 45D. When the hardness of the polymer substrate layer satisfies the above-mentioned range, a contact area may be formed between the protrusion and a polishing object, and the lifetime and efficiency of a polishing pad may be improved as well, which is preferred.

In one embodiment of the present invention, as a polymer material with shore hardness of 20D to 70D forming the polymer substrate layer 10, one or more types selected from the group consisting of a polyurethane resin, a UV curable resin, a silicone resin and the like may be used. However, the material is not limited thereto, and materials known in the art may be used without limit as long as they do not adversely affect the present invention.

In addition, as a hard polymer material with shore hardness of 45D to 70D forming the hard polymer coating layer 30, one or more types selected from the group consisting of a polyurethane resin, a UV curable resin, a silicone resin and the like may be used. However, the material is not limited thereto, and materials known in the art may be used without limit as long as they do not adversely affect the present invention.

In one embodiment of the present invention, the polymer substrate layer 10 may have a thickness of 2 mm to 50 mm, and more preferably 3 mm to 30 mm, except for the height of the protrusion.

The polymer substrate layer 10 may be formed of, for example, two or more layers. In other words, the polymer substrate layer 10 may be a form in which a soft polymer substrate layer with shore hardness of 20D to 45D is disposed inside based on the polishing surface, and a hard polymer layer with shore hardness of 45D to 70D is stacked on the outer surface of the soft polymer material. In this case, the carbon nanotube layer may be provided on the surface of the hard polymer layer.

As described above, when the polymer substrate layer 10 is formed of a laminate of a soft polymer layer and a hard polymer layer, a wide contact area may be secured due to the soft polymer layer, and abrasive particles may be deeply pressed-in due to the hard polymer layer on the surface. In addition, it is also possible to improve the polishing efficiency and lifetime of the polishing pad according to the function of each layer.

The above effect may be expressed as an image as in FIG. 4. FIG. 4 illustrates a contact pattern between a fine protrusion, an abrasive particle and a polishing object (for example: wafer) varying by differences in mechanical properties of the fine protrusion provided in the polishing pad.

As shown in FIG. 4A, a fine protrusion having mechanically soft properties is readily deformed, thereby having a wide contact area, but is not able to press-in and polish a surface of a polishing object since a sufficient load is not applied to abrasive particles. In addition, it has a disadvantage in that it is readily worn, and thus continuous use as a polishing pad is impossible.

On the other hand, a fine protrusion having mechanically strong properties (for example: fine protrusion made of a material with high abrasion resistance) has an advantage of, as shown in FIG. 4B, being able to deeply press-in and polish a surface of a polishing object by applying a load to abrasive particles, but has a disadvantage of not forming a wide contact area with the polishing object.

However, as shown in FIG. 4C, the above-described effect may be obtained when forming a coating layer on a surface of a fine protrusion having mechanically soft properties using a material having mechanically strong properties (for example: material with high abrasion resistance).

As described above, when the polymer substrate layer 10 if formed of a laminate of a soft polymer layer and a hard polymer layer, it may have a thickness of 1 mm to 20 mm, and more preferably 2 mm to 10 mm, except for the height of the protrusion. In addition, the hard polymer layer may have a thickness of 5 um to 90 um, and more preferably 10 um to 40 um, except for the height of the protrusion. The coating layer thickness being less than the above-mentioned thickness is not preferred since the polishing pad is readily worn, and the coating layer being too thick is not preferred since abrasive particle holding power is reduced by the carbon nanotubes and the polishing contact area is reduced at the same time. However, the above-mentioned range may be properly adjusted by adjusting the density and length of the carbon nanotube.

In one embodiment of the present invention, the protrusion may have a maximum width of 10 um to 500 um, and a height of 3 um to 150 um. However, the above maximum width and the height are not limited to these ranges, and may be properly adjusted depending on the polishing object and the polishing condition.

In one embodiment of the present invention, the protrusion may have, for example, a hemisphere-like shape, however, the shape is not particularly limited. As shown in FIG. 2 and FIG. 3, the protrusion includes the polymer substrate layer 10 and the carbon nanotube layer 20, and protrudes in an upward direction of the composite polishing pad.

In one embodiment of the present invention, the composite polishing pad may have a structure in which pores do not exist between a polymer substrate layer 10 and carbon nanotubes embedded in and fixed to the substrate layer 10. When pores do not exist, the polymer substrate layer 10 and the carbon nanotubes embedded in and fixed to the substrate layer 10 may be bound more firmly, which is preferred.

Such a structure in which pores do not exist may be formed by forming bonds between the layers under vacuum as to be described below. The expression that pores do not exist may mean that pores do not substantially exist.

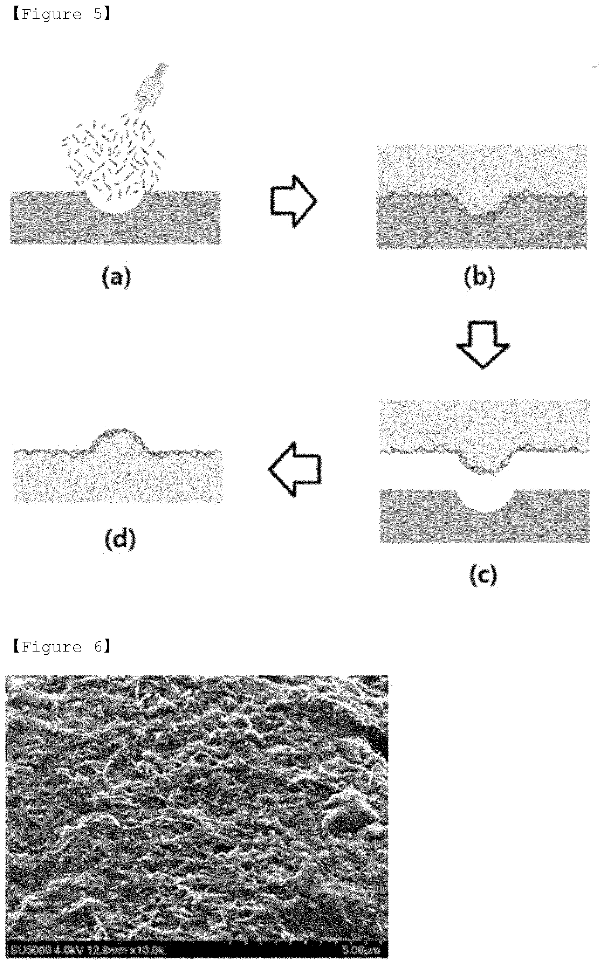

The present invention also provides a method for producing a composite polishing pad for CMP, and the production method may include, as shown in FIG. 5, the following steps (a) to (c):
(a) scattering carbon nanotubes on a mold having a plurality of protrusions engraved therein so that some thereof overlap each other;
(b) forming a polymer substrate layer with a flat upper surface by coating a polymer on the upper portion of the carbon nanotubes; and
(c) demolding the mold.

The method of scattering carbon nanotubes so that some thereof overlap each other in the step (a) may be performed using methods known in the art. For example, as shown in FIG. 5, a method of spraying carbon nanotubes onto a mold through a nozzle may be used. Herein, the carbon nanotubes may be sprayed in a dispersed form in a solvent. Examples of the solvent may include water, ethanol, isopropyl alcohol and the like, but are not limited thereto.

The coating of the step (b) may be performed using methods known in the art. For example, methods such as spin coating and spray coating may be used, and the coating may be performed using other methods known in the art.

In one embodiment of the present invention, the step (b) may be performed under vacuum. Coating under vacuum is preferred since it may prevent formation of pores between the carbon nanotubes and the polymer substrate layer, and the carbon nanotubes may be more strongly embedded and fixed accordingly.

The present invention also provides another method for producing a composite polishing pad for CMP, and the production method may include the following steps (a) to (d) :
(a) scattering carbon nanotubes on a substrate so that some thereof overlap each other;
(b) forming a polymer substrate layer with a flat upper surface by coating a polymer on the upper portion of the carbon nanotubes;
(c) separating and removing the substrate from the carbon nanotubes; and
(d) forming a plurality of protrusions including the polymer substrate layer, the carbon nanotube layer arranged in a net form by conducting an embossing treatment on the substrate-removed surface.

The coating of the step (b) may be performed using methods known in the art. For example, methods such as spin coating and spray coating may be used, and the coating may be performed using other methods known in the art.

The separating of the substrate in the step (c) may be performed using methods such as mechanical silicon separation (release) and silicon etching.

The embossing treatment in the step (d) may be conducted by pressurizing the upper surface of the substrate-removed carbon nanotubes with a mold having a plurality of protrusions engraved therein under a heating condition. In this case, the mold temperature may be from 200°C to 250°C, but is not limited thereto. As the mold, those made of metal materials such as nickel and copper may be used, and the micropattern may be manufactured using a micro electro-mechanical system (MEMS) process.

In one embodiment of the present invention, the step (b) may be performed under vacuum. Coating under vacuum is preferred since it may prevent formation of pores between the carbon nanotubes and the polymer substrate layer, and the carbon nanotubes may be more strongly embedded and fixed accordingly.

Hereinafter, the present invention will be described in detail with reference to examples in order to specifically describe the present invention. However, the examples according to the present invention may be modified to various different forms, and the scope of the present invention is not to be construed as being limited to the examples described below. Examples of the present invention are provided in order to more fully describe the present invention to those having average knowledge in the art.

### Example 1: Production of Composite Polishing Pad

A carbon nanotube dispersion was prepared by dispersing carbon nanotubes into isopropyl alcohol. Then, the dispersion was coated on a mold in which a plurality of hemispherical protrusions having a radius of 50 um are engraved using a pneumatic nozzle. On the carbon nanotube-coated mold, a polyurethane resin (50 um) having shore hardness of 30D was coated under a vacuum atmosphere to form a polymer substrate layer having a thickness of 5 mm based on the upper end portion of the carbon nanotubes.

After curing the polymer substrate layer, the mold was separated and removed to produce the composite polishing pad of the present invention.

### Example 2: Production of Composite Polishing Pad

A carbon nanotube dispersion was prepared by dispersing carbon nanotubes into isopropyl alcohol. Then, the dispersion was coated on a polypropylene substrate placed on a hot plate heated to 60°C using a pneumatic nozzle. On the carbon nanotube-coated mold, a polyurethane resin having shore hardness of 30D (trade name: Smooth-Cast^{™} 30D, manufactured by Smooth-On) was coated under a vacuum atmosphere to form a polymer substrate layer having a thickness of 5 mm based on the upper end portion of the carbon nanotubes.

After curing the polymer substrate layer, an embossing treatment was conducted by pressurization at 20O°C using a mold in which a plurality of hemispherical protrusions having a radius of 50 um are engraved, and as a result, a composite polishing pad of the present invention was produced.

### Example 3: Production of Composite Polishing Pad

A carbon nanotube dispersion was prepared by dispersing carbon nanotubes into isopropyl alcohol. Then, the dispersion was coated on a polypropylene substrate placed on a hot plate heated to 60°C using a pneumatic nozzle. On the carbon nanotube-coated mold, a polyurethane resin having shore hardness of 45D (trade name: Smooth-Cast^{™} 45D, manufactured by Smooth-On) was coated through spin coating under a vacuum atmosphere to form a hard polymer layer having a thickness of 5 um based on the upper end portion of the carbon nanotubes.

After curing the hard polymer layer, the silicon substrate was mechanically separated to transfer the carbon nanotubes to the polyurethane.

On the hard polymer layer on the opposite side of the separated carbon nanotubes, a polyurethane resin having shore hardness of 30D (trade name: Smooth-Cast^{™} 30D, manufactured by Smooth-On) was coated under a vacuum atmosphere to form a soft polymer layer having a thickness of 5 mm.

After curing the soft polymer substrate layer, an embossing treatment was conducted by pressurizing the carbon nanotubes from the upper portion at 200°C using a mold in which a plurality of hemispherical protrusions having a radius of 50 um are engraved, and as a result, a composite polishing pad of the present invention was produced.

### Comparative Example 1: Production of Composite Polishing Pad

A polyurethane resin having shore hardness of 30D (trade name: Smooth-Cast^{™} 30D, manufactured by Smooth-On) was coated to form a polymer substrate layer having a thickness of 5 mm.

After curing the polymer substrate layer, an embossing treatment was conducted by pressurization at 20O°C using a mold in which a plurality of hemispherical protrusions having a radius of 50 um are engraved, and as a result, a composite polishing pad was produced.

### [Reference Numeral]

| | | | |
|---|---|---|---|
| 1: | Rotary Table | 2: | Wafer |
| 3: | Carrier (Rotating Head) | 4: | Conditioner |
| 5: | Nozzle | | |
| 10: | Soft Polymer Substrate Layer | | |
| 20: | Carbon Nanotube Layer | 22: | Carbon Nanotube |
| 30: | Hard Polymer Coating Layer | | |
| 100: | Composite Polishing Pad | | |

## Claims

1. A composite polishing pad for CMP, comprising:
a polymer substrate layer including a plurality of protrusions formed on an upper surface thereof; and
a carbon nanotube layer including carbon nanotubes embedded in and fixed to the upper surface of the substrate layer.

2. The composite polishing pad for CMP of claim 1, wherein the carbon nanotube layer comprises carbon nanotubes embedded in the polymer substrate layer in an irregular net form structure.

3. The composite polishing pad for CMP of claim 2, wherein the irregular net form structure is a structure formed by scattering the carbon nanotubes so that some thereof overlap each other.

4. The composite polishing pad for CMP of claim 1, wherein the polymer substrate layer has shore hardness of 20D to 70D.

5. The composite polishing pad for CMP of claim 1, wherein the protrusion has a maximum width of 10 um to 500 um, and a height of 3 um to 150 um.

6. The composite polishing pad for CMP of claim 1, wherein the carbon nanotubes have a diameter of 1 nm to 50 nm, and a length of 1 um to 30 um.

7. The composite polishing pad for CMP of claim 1, wherein the protrusion has a hemisphere-like shape.

8. A method for producing a composite polishing pad for CMP, comprising:
(a) scattering carbon nanotubes on a mold having a plurality of protrusions engraved therein so that some thereof overlap each other;
(b) forming a polymer substrate layer with a flat upper surface by coating a polymer on the upper portion of the carbon nanotubes; and
(c) demolding the mold.

9. The method for producing a composite polishing pad for CMP of claim 8, wherein (b) above is performed under vacuum.

10. A method for producing a composite polishing pad for CMP, comprising:
(a) scattering carbon nanotubes on a substrate so that some thereof overlap each other;
(b) forming a polymer substrate layer with a flat upper surface by coating a polymer on the upper portion of the carbon nanotubes;
(c) separating and removing the substrate from the carbon nanotubes; and
(d) forming a plurality of protrusions including the polymer substrate layer and the carbon nanotube layer in an irregular net form structure by conducting an embossing treatment on the substrate-removed surface.

11. The method for producing a composite polishing pad for CMP, of claim 10, wherein the embossing treatment in (e) above is conducted by pressurizing the upper surface of the substrate-removed carbon nanotubes with a mold having a plurality of protrusions engraved therein under a heating condition.

12. The method for producing a composite polishing pad for CMP, of claim 10, wherein (b) above is performed under vacuum.
